# EUROPEAN PATENT APPLICATION

(11) **EP 0 589 253 A1**
(43) Date of publication of application: **30.03.1994**
(21) Application number: 93114007.3
(22) Date of filing: 02.09.1993
(51) Int. Cl.: B60T 11/10, B60T 7/12, B60T 17/16

(54) **Automatic device for the temporary parking of motor vehicles**

(30) Priority: 04.09.1992 IT PD920156
(71) Applicant: Strazzabosco, Giovanni, I-36012 Asiago (Vicenza) (IT)
(72) Inventor: Strazzabosco, Giovanni, I-36012 Asiago (Vicenza) (IT)
(74) Representative: Gustorf, Gerhard, Dipl.-Ing.

(57) **Abstract**

The present invention is an automatic device for the temporary locking of the brakes (D) of motor vehicles in general. This device allows to keep the vehicle temporarily braked without having to act continuously on the service brake (F) or on the parking brake.

Owing to this device the brake fluid maintains the pressure necessary to keep the braking system active.

## Description

The present invention relates to an automatic device for the temporary parking of motor vehicles.

At present the braking systems of motor vehicles consist of the service brake, operated by a pedal, and the parking brake, operated by a hand lever. In case of stops on sloping grounds these systems compel the driver to keep the pedal pressed or to pull the hand lever.

The present patent allows to keep the vehicle still by means of the usual service brake, but without obliging the driver to press the pedal continuously or to pull the hand lever.

In its main parts the invention consists of some movement sensors connected with the transmission gears of the vehicle, of sensors connected with the brake and accelerator pedals, of a solenoid valve, of two one-way pressure switch valves, one of which can be calibrated, inserted in the braking circuit, and of one electric/electronic circuit for the control and management of the device; both the sensors and the valves are connected with the management circuit.

The solenoid valve is of the usually open type and is placed between the brake control pump, which is operated by the relevant pedal, and the small pistons operating the relevant brakes; when it is closed this solenoid valve obstructs the flow of the braking circuit fluid in both senses.

The one-way pressure switch valves of the usually closed type are parallel to the solenoid valve, in symmetric position.

One of these pressure switch valves allows to further compress the fluid toward the brake pistons, thus increasing the braking effect even when the solenoid valve is closed.

The other pressure switch valve allows the braking circuit fluid to reflow from the brake pistons back to the control pump, if the pressure of the fluid itself exceeds a predetermined value that can be set on the valve itself.

The movement sensors are connected with the transmission gears of the motor vehicle and indicate when the motor vehicle itself is at a standstill, that is, when it is not moving.

Other sensors are connected with the accelerator and the brake pedals; these sensors send forth an electric signal when the pedals of the accelerator and of the brakes are partially or completely pressed or are in particular positions, for example, when the pedal is only slighlty pressed or has covered two thirds of its stroke.

The control and management electric/electronic circuit supervises the operation of the device and can be connected when necessary, that is, in case of repeated stops on a sloping road; this circuit receives the signals sent forth by the sensors, regarding the motor vehicle movement and the accelerator and brake pedals, and operates the solenoid valve.

When the device is operated, it waits for the brake pedal to be pressed; then it waits until the vehicle is at a standstill to close the solenoid valve, in such a way as to keep the braking circuit fluid under pressure between the solenoid valve itself and the pistons operating the brakes.

At this point it is possible to release the brake pedal, since the pressure, maintained constant by the solenoid valve, keeps the motor vehicle braked.

When the accelerator pedal is pressed to start again, the sensor with which it is connected signals this action to the control circuit, which provides for releasing the solenoid valve; on its turn the solenoid valve opens and allows the reflow of the fluid, thus eliminating the braking effect.

During every braking, before the motor vehicle reaches a standstill, a pressure exceeding the pressure necessary to keep the vehicle braked is exerted on the pedal and therefore on the hydraulic circuit of the brakes. Due to this fact the various elements like the small pistons, the shoes, the pads, the discs and the solenoid valve should stand a considerable stress and could easily be damaged: in order to avoid this inconvenience two usually closed one-way pressure switch valves, positioned one opposite the other, are placed in the hydraulic circuit, parallel to the solenoid valve.

One of these valves blocks the reflow of the brake piston fluid to the brake pedal control pump, thus allowing an increase of the braking effect controlled by the brake pedal. The other pressure switch valve allows the fluid to flow only from the brake pistons to the pump controlled by the pedal and only if the fluid pressure exceeds a given value; the practical effect thus obtained is a decrease of the exceeding pressure on the above mentioned elements, maintaining it within values that are sufficient to guarantee the braking effect on sloping roads with the vehicle at a standstill. The limit pressure of the pressure switch valve can be manually adjusted by means of a screw, in such a way as to adapt it to the weight of the motor vehicle.

The device can distinguish between a normal braking and a sudden braking with locking of the wheels and consequent skidding and in this case the device does not begin working and guarantees the total control of the motor vehicle.

It is possible to connect the control circuit with the part of the electric system of the vehicle controlling the rear stop lights, so that when the device is on also these lights are operated, thus simulating the driver's behaviour completely.

As already mentioned, the whole device is not always working, but is operated by means of a switch, a lever, or anything the driver chooses.

The device can be installed also on industrial vehicles, mounting a braking disc with relevant caliper on the propeller shaft.

A simpler configuration has also been designed, with a switch in the interior compartment of the vehicle, meant to operate the solenoid valve, thus pre-arranging, for the following stop, the circuit closing, thanks to which the pressure is maintained constant in the circuit itself and the vehicle can be braked.

The following is just an example among many of the practical applications of the invention in question, illustrated in the attached table.

A wheel (R) with the relevant brake (D) is shown.

The sensor (S1) feels the movement of the vehicle and signals this electrically to the control circuit (C); other sensors (S2, S3) are placed on the controls of the accelerator (A) and of the brake (F).

One usually open solenoid valve (V1) and two one-way pressure switch valves (V2, V3) parallel to the solenoid valve (V1) and opposite to each other are placed on the hydraulic circuit of the brakes. A further air valve (V4) is placed on the pipe leading the brake pedal fluid to the solenoid valve (V1).

A switch (I) operated by the driver connects or disconnects the device by simply giving or taking the electric power.

All the sensors (S1, S2, S3) and also the solenoid valve (V1) are connected with the control circuit (C) that can also operate the rear stop lights (L) of the vehicle.

When the device is disconnected, that is, when the switch (I) is open, the braking system works as usual, which means that to keep the vehicle at a standstill on a sloping road it is necessary to press the brake pedal.

When the device is on, that is, when the switch (I) is closed, the circuit waits for the sensor (S3) to take the pressure on the brake (F) pedal; when this happens it waits until the sensor (S1), which is placed on the transmission gears, indicates that the vehicle is stationary.

When the vehicle is at a standstill the control circuit (C) operates the closing of the solenoid valve (V1), in such a way as to keep the fluid of the braking circuit under pressure between the solenoid valve (V1) itself and the small pistons operating the brakes (D); besides, it turns on the stop lights (L) of the motor vehicle, simulating the driver's behaviour completely.

At this point it is possible to release the brake (F) pedal, since the pressure maintained constant by the solenoid valve (V1) keeps the vehicle braked.

The second one-way pressure switch valve (V2), placed parallel to the solenoid valve (V1), allows the fluid to flow only from the brake (D) pistons to the pump controlled by the brake (F) pedal and decreases the exceeding pressure on the brakes (D), at the same time maintaining it within values sufficient to guarantee the braking effect.

The limit pressure of the pressure switch valve (V2) can be adjusted in such a way as to adapt it to the weight of the vehicle.

When the accelerator (A) pedal is pressed to start again, the sensor (S2) with which it is connected signals this action to the control circuit (C), which provides for releasing the solenoid valve (V1); on its turn the solenoid valve (V1) opens and allows the reflow of the fluid, thus eliminating the braking effect.

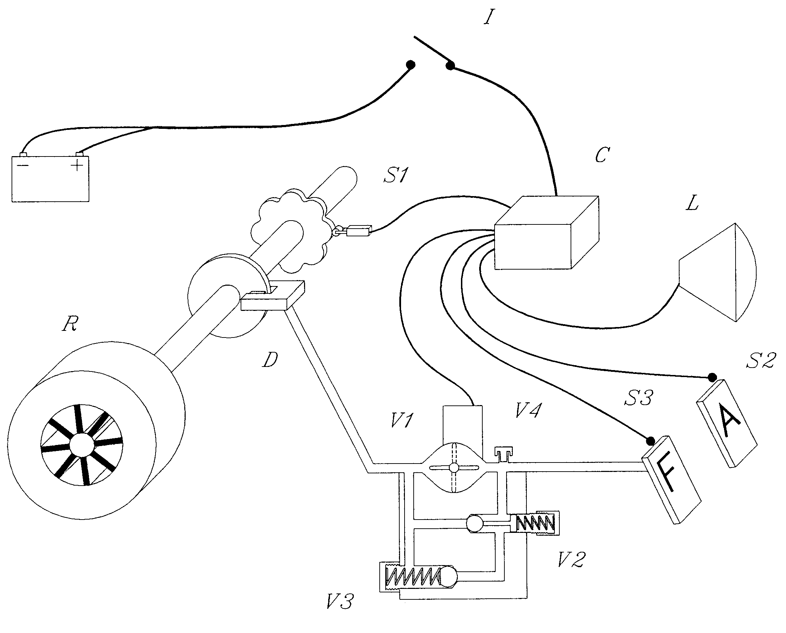

## Claims

**1)** Automatic parking device characterized by the fact that when the motor vehicle is at a standstill it keeps the brakes working, releasing them only after the driver has pressed the accelerator pedal.

**2)** Automatic parking device as in claim 1), characterized by the fact that a control circuit feels, by means of a movement sensor, the stop of the vehicle and operates the solenoid valve that maintains the pressure constant on the hydraulic circuit of the brakes, thus keeping the motor vehicle braked.

**3)** Automatic parking device as in claims 1), 2) characterized by the fact that the pressure switch valve allows the reflow of the exceeding fluid from the brakes to the brake control pump when the pressure of the fluid itself exceeds the pressure necessary to keep the motor vehicle braked.

**4)** Automatic parking device as in claim 1), 2), 3) characterized by the fact that the control circuit releases the solenoid valve when the sensor connected with the accelerator takes the pressure of the pedal itself.

**5)** Automatic parking device as in claim 1), 2), 3), 4), characterized by the fact that the device can be connected and disconnected in any moment by simply giving or taking the electric power.

**6)** Automatic parking device characterized by the fact that in series to the electric connection between accelerator and central unit there is an inertial switch that can open the circuit between accelerator and central unit, thus making the circuit passive.

**7)** Automatic parking device as in claim 1), 2), 4), characterized by the fact that inside the vehicle there is a switch that operates the solenoid valve, pre-arranging, in case of a successive stop, the closing of the circuit with the consequent operation of the device and therefore maintaining the pressure constant on the circuit itself, which allows to keep the vehicle braked.

**8)** Automatic parking device as in claim 7), characterized by the fact that it has an inertial switch in series that closes only when the machine is stationary and that enables the system only if the machine is stationary.
